# EUROPEAN PATENT SPECIFICATION

(11) **EP 2 526 585 B1**
(45) Date of publication and mention of the grant of the patent: **11.03.2015**
(21) Application number: 11707997.0
(22) Date of filing: 21.01.2011
(51) Int. Cl.: H01M 8/02

(54) **FIVE-LAYER MEMBRANE ELECTRODE ASSEMBLY WITH ATTACHED BORDER AND METHOD OF MAKING SAME**
FÜNFSCHICHTIGE MEMBRANELEKTRODENANORDNUNG MIT BEFESTIGTEM RAND UND HERSTELLUNGSVERFAHREN DAFÜR
ENSEMBLE D'ÉLECTRODE À MEMBRANE À CINQ COUCHES COMPRENANT UNE BORDURE FIXÉE ET PROCÉDÉ DE FABRICATION ASSOCIÉ

(30) Priority: 21.01.2010 US 690988
(43) Date of publication of application: 28.11.2012
(73) Proprietor: W.L. Gore & Associates GmbH, 85640 Putzbrunn (DE)
(72) Inventor: NACHTMANN, Anton, 83714 Miesbach (DE); TELLER, Oliver, Hockessin DE 19707 (US); KILLER, Anton, 83623 Dietramszell (DE)
(74) Representative: Rankin, Douglas
(86) International application number: PCT/EP2011/000240
(87) International publication number: WO 2011/089008

(56) References cited:
- EP-A2- 2 096 701
- US-A1- 2009 142 641
- US-A1- 2009 286 121
- US-A1- 2009 291 350

## Description

### FIELD OF THE INVENTION

This invention pertains to polymer electrolyte membrane (PEM) fuel cells and, more particularly, to a five-layer membrane electrode assembly with an attached border, for use in PEM fuel cells, and a method of making same.

### BACKGROUND OF THE INVENTION

A critical component of a polymer electrolyte membrane fuel cell (PEMFC) is the ion exchange membrane. Typically, the membrane is disposed between an anode and a cathode. The electrodes contain catalysts that promote the reactions of fuel (the anode for hydrogen fuel cells) and the oxidant (oxygen for hydrogen fuel cells), and may comprise any various noble metals, or other well known catalysts. A "catalyst coated membrane" (CCM) means the combination of at least one membrane and at least one such electrode containing a catalyst that is adjacent to the membrane. A fully catalyzed membrane assembly (FCMA) is a CCM where at least one electrode covers substantially the entire face of the membrane to which it is adjacent (i.e., the electrode is co-extensive with the membrane). A typical catalyst coated membrane has an anode bonded to one surface of the membrane and a cathode bonded to the other surface of the membrane, although (bonding is not essential). Such a typical catalyst coated membrane is also referred to herein as a "membrane electrode assembly."

In a PEMFC the membrane facilitates the transmission of ions from one electrode to the other during operation of the fuel cell. Ideally, the membrane is as thin as possible to allow the ions to travel as quickly as possible between the electrodes. As membranes get thinner, however, they typically get weaker. Therefore, reinforcement of the membrane is needed. One solution to this is the incorporation of a reinforcement within the membrane. An example of such a solution is embodied in U.S. Patent No. RE37,307 to Bahar et al, disclosing the use of a porous material such as expanded polytetrafluoroethylene (PTFE) as a support for a membrane.

There is a need, however, for even further reinforcement of a membrane and the MEA formed from it in certain situations. When a membrane is used in an assembly that includes gas diffusion layers for example, which are typically made of carbon fiber paper, the carbon fibers are known to occasionally puncture the membrane, thereby short circuiting the assembly and decreasing or destroying its performance. Puncture of the assembly can occur during the manufacturing process of the assembly itself, or it can occur during the seal molding process due to mold clamping pressures. Puncture can also occur over time during use, or through handling during processing or stack assembly. Protecting the membrane from gas diffusion media fiber puncture is therefore desirable.

Further, additional support for the membrane and MEA is frequently necessary to increase overall dimensional stability. Environmental conditions such as humidity, or simply handling of the membrane, may cause damage to the membrane. Additional reinforcement and support to increase this dimensional stability is desired.

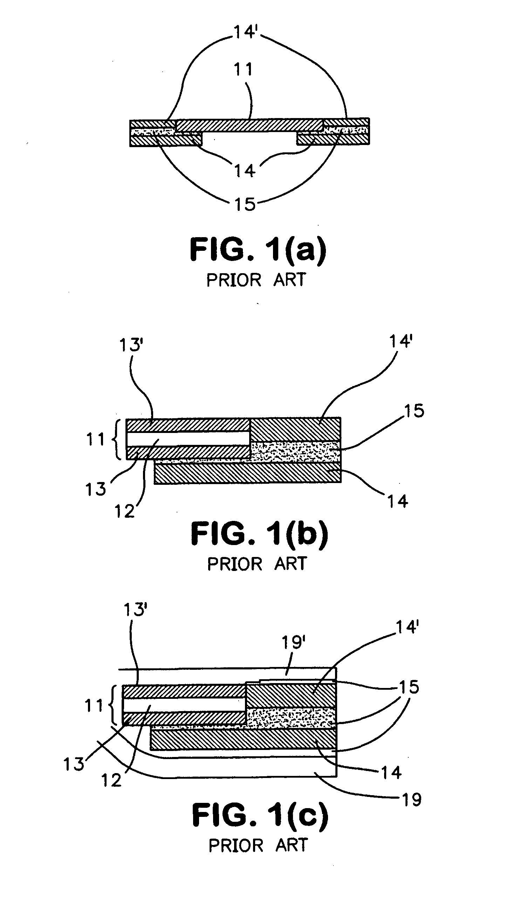

A typical attempt to provide such additional support is shown in Figs. 1(a) - 1(c). In Figs 1(a) and 1(b), a 3-layer MEA 11, formed of membrane 12 and two electrodes 13 and 13' has a first structural film layer 14 and a second structural film layer 14', disposed around the periphery of 3-layer MEA 11. Adhesive 15 is used to bond first structural film layer 14 to second structural film layer 14' and to 3-layer MEA 11. This structure provides good support for 3-layer MEA 11.

Fig. 1(c) depicts the structure of Fig. 1(b) with two additional layers, gas diffusion layers 19 and 19', disposed on either side of 3-layer MEA 11 to form a 5-layer MEA, as referenced herein. Importantly, gas diffusion layers 19 and 19' in this prior art structure are attached to first structural film layer 14 and second structural film layer 14' with additional layers of adhesive 15.

The use of this additional layer of adhesive 15 has numerous disadvantages: it increases the thickness of the 5-layer MEA; it creates the risk of excess adhesive leaking out of the 5-layer MEA; it requires additional process steps; it adds more time to the 5-layer MEA process; it adds cost to the assembly process; it has possibly disadvantageous chemical effects; it requires application of pressure to the entire surface of the gas diffusion layer borders, thereby increasing the risk of structural damage to the assembly. An improved structure and method for supporting a 5-layer MEA is desirable.

US 2009/0142641 A1 (Panasonic Corporation) describes a fuel cell module in which an edge of a polymer electrolyte membrane is supported by a frame body made of a frame and a resin material.

### SUMMARY OF THE INVENTION

The present invention provides an apparatus having a membrane, an anode adjacent one side of said membrane, a cathode adjacent an opposite side of said membrane forming a membrane electrode assembly (MEA), a first structural film layer disposed at a periphery of the MEA, a second structural film layer adhered to the first structural film layer by an adhesive, at least one of the first and second structural film layers also being adhered to one of an anode and cathode by the adhesive, the MEA and the first and second structural film layers being sandwiched by a pair of gas diffusion layers, characterized in that the first structural film layer has a plurality of vias therein (formed in any imaginable geometry); and the second structural film layer has a plurality of vias therein (also formed in any imaginable geometry) which are in non-overlapping relation to the vias in the first structural film layer; wherein the adhesive extends through the vias in the first structural film layer to adhere one of said pair of gas diffusion layers to the first structural film layer, and the adhesive extends through the vias in the second structural film layer to adhere the other of the pair of gas diffusion layers to the second structural film layer.

In another aspect, the invention provides a method of making the above apparatus by providing a plurality of vias in the first structural film layer, providing a plurality of vias in the second structural film layer in non-overlapping relation to the vias in said first structural film layer, providing adhesive on at least one (and preferably both) of the first and second structural film layers to adhere them together, and adhering one of said pair of gas diffusion layers to the first structural film layer by the adhesive extending through said vias in the first structural film layer, and adhering the other of the pair of gas diffusion layers to the second structural film layer by the adhesive extending through the vias in the second structural film layer.

### BRIEF DESCRIPTION OF THE DRAWINGS

Figures 1(a)-(b) are cross-sectional side views of prior art 3-layer MEAs.
Figure 1(c) is a cross-sectional side views of a prior art 5-layer MEA.
Figure 2 is a cross-sectional side view of an exemplary embodiment of the present invention.
Figure 3(a) is a top view of an exemplary embodiment of an anode-side structural support film according to the present invention.
Figure 3(b) is a top view of an exemplary embodiment of a cathode-side structural support film according to the present invention.
Figure 4(a) is a top view of the exemplary embodiments of Figs. 3(a) and 3(b) adhered together.
Figure 4(b) is a top view of the exemplary embodiments of Fig. 4(a) showing the limits of a CCM layer and a GDL layer.
Figure 5 is a cross-sectional side view of an alternative embodiment of the present invention.

### DETAILED DESCRIPTION OF THE INVENTION

The instant invention is embodied in an assembly with an electrode that is co-extensive with a membrane, i.e. covers the entire face of the membrane, in combination with a structural film layer that overlaps the outer region of the face of one or both electrode(s). As used herein, "structural film layer" means a hard, non-elastomeric solid. It is not compressible to any significant degree. Its function is not to perform sealing. Non-elastomeric polymers as used herein are polymers that will not return to substantially their original length after being stretched repeatedly to at least twice their original length at room temperature. As used herein "overlaps" or "overlapping" means the structural film layer is over, and covering, a portion of the outer region of the face of one or both electrode(s).

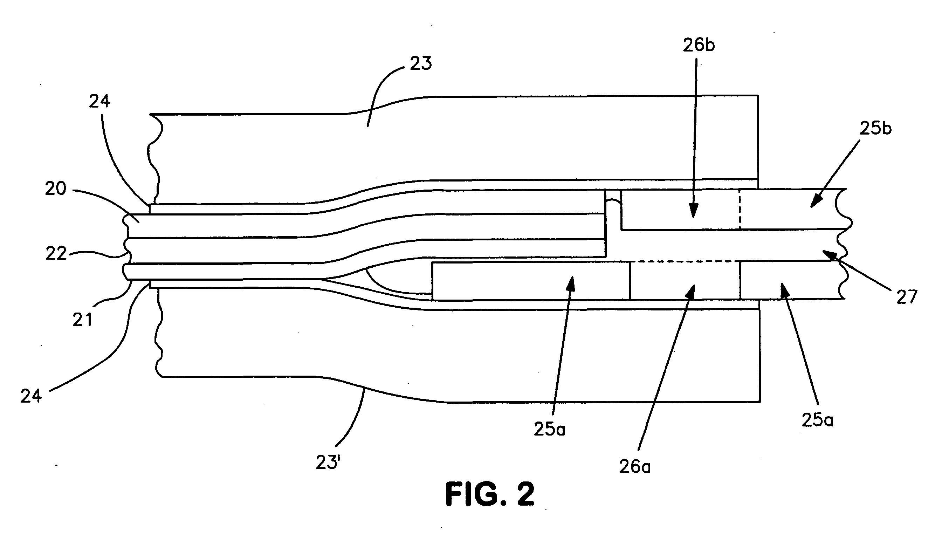

The invention will now be described with specific reference to Figure 2. Figure 2 illustrates a membrane 22 having an anode 21 and cathode 20 disposed thereon to form a membrane electrode assembly. Sandwiching the membrane electrode assembly are gas diffusion layers 23 and 23'. The first structural film layer 25a is disposed around the periphery of the MEA. A second structural film layer 25b is also disposed around the periphery of the MEA. First structural film layer 25a has a plurality of vias 26a formed therein. Similarly, second structural film layer 25b has a plurality of vias 26b formed in it. The vias 26b in second structural film layer 25b are formed in non-overlapping relation to the vias 26a formed in first structural film layer 25a. Adhesive 27 is disposed between first structural film layer 25a and second structural film layer 25b. The adhesive is preferably applied in equal parts to the surfaces of both first structural film layer 25a and second structural film layer 25b. Subsequently, as the film layers are laminated together, the respective adhesive coatings form a single adhesive layer 27 between first and second structural film layers 25a and 25b. Alternatively, adhesive 27 may simply be applied on the surface of one of the structural film layers and not the other, although this method is not preferred. Adhesive 27 extends through vias 26a and 26b to adhere to gas diffusion layers 23 and 23'. There are different manufacturing methods feasible, and also different methods of bonding. For example, ultrasonic bonding, not only temperature and pressure, may be used to adhere structural support films 25a and 25b. There is also a variety of adhesive types possible, and different methods of activating those adhesives.

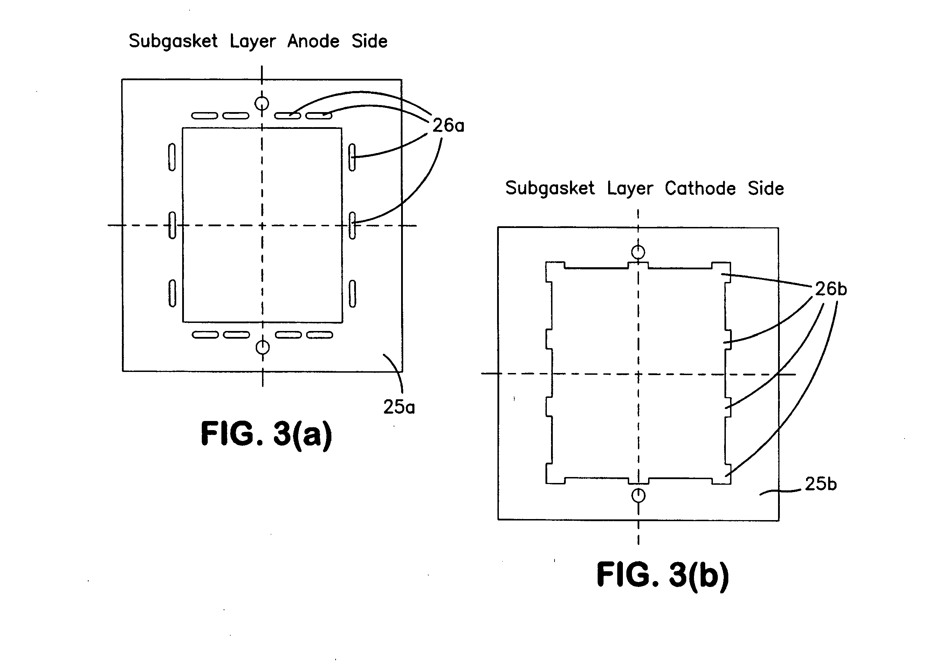

Figure 3a shows top view of an exemplary embodiment of an anode-side structural film layer 25a. Vias 26a are formed therein.

Similarly, Figure 3B is a top view of second structural film layer 25b with vias 26b formed therein. Vias 26a and 26b are shown in the particular shapes for illustration purposes only. These vias 26a and 26b may be of any imaginable geometry. When there are vias or cut-outs at the corners of the second structural film layer, as illustrated in Figure 3b, it provides sharp edges at the MEA inserts (this allows simple straight MEA cuts with no chamfers or radii, which may be easier for manufacturing). Also, different distributions or arrangements of vias are possible. The only significant consideration is that vias 26a and 26b be formed in non-overlapping fashion.

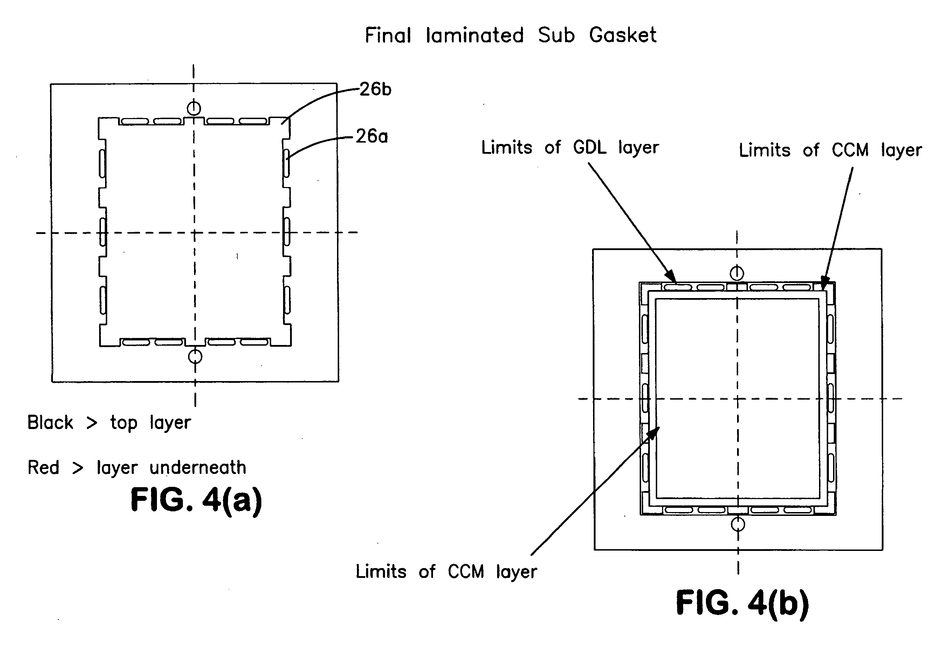

Figure 4a is a top view of the exemplary embodiments of Figures 3a and 3b adhere together. This Figure 4a illustrates the non-overlapping relation of vias 26a and 26b.

Figure 4b is a top view of the exemplary embodiment of Figure 4a further combined with the GDL layers. The figure illustrates the limits of the CCM layer and the GDL layer.

Turning to an exemplary assembly process for the present invention, production of a 5-layer MEA begins with the production of the subgasket frame (i.e., the structural film layer). This frame contains a central, generally rectangular opening (although other configurations or geometries could be possible as well), into which the CCM is fitted and bonded in an additional step.

For this purpose, a corresponding window is made (punching, cutting, laser treatment, etc.) with the size of the active surface (i.e., the CCM to be introduced later) is first made from an uncoated PEN film (roll product or individual sheet). From this first layer, the glue-coated PEN-film is joined and thermally laminated bubble-free over the entire surface.

In the next step, the complete final contour of the subgasket can already be formed (punching, cutting, laser treatment). The final contour contains, according to the customer's requirements, all openings of the fluid channels and stack fixation, as well as the second central window of the active surface.

The central window in the glue-coated PEN film is laid out somewhat smaller, so that a gradation with open glue surface is formed to this window of uncoated PEN film.

In the same process step, a continuous perforation, as well as protrusions for later bonding of the GDL cutouts, are made on the two PEN films in the edge region of the central cutouts (see drawings).

For orientation and marking of the MEA, the part number is printed on the cathode side.

In the next production step, the CCM is brought to size (cut, punched, etc.), then inserted in the subgasket frame and tightly sealed continuously to the open glue edge of the subgasket window by means of pressure and temperature.

The CCM can be coated asymmetrically, i.e., the two electrode coatings of the Gore Select^{®} Membrane can have a different catalyst load for functional and cost reasons. The proper assembly position must therefore be ensured during assembly.

To ensure quality, a corresponding optical inspection is made in each manufacturing step. In the last working step, the GDL cutouts, each with the microlayer side facing the CCM, are added on both sides, joined to fit and bonded peripherally only along the edge with pressure and temperature against the subgasket frame. The geometry specially formed in the edge area of the active surface of the subgasket frame exposes corresponding glue surfaces, in order to permit bonding of the GDL. On the cathode side, glue surfaces are additionally exposed by additional protrusions, in order to attach the GDL continuously at some points. On the anode side, during bonding of the GDL, glue flows through the perforation along the cutout of the active surface and thus fixes the GDL on this side. Again the adhesive is preferably applied equally to both portions of the subgasket frame. The coated PEN films, however, are joined and laminated, so that the two glue coatings come together in the center between the films.

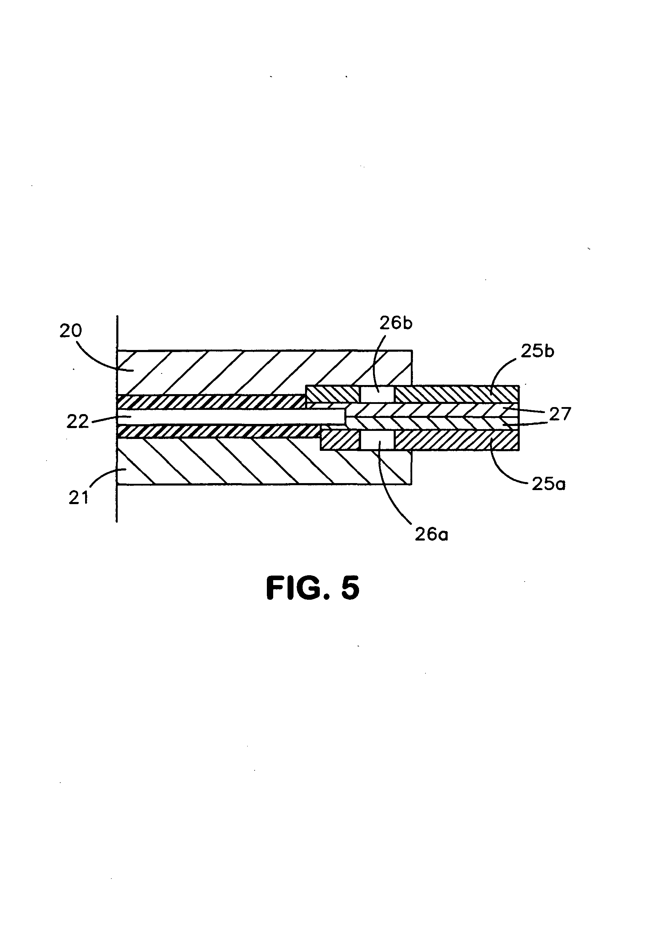

The GDL need not be continually sealed tight, but only held in position for the subsequent stack assembly. In addition, the disclosed invention has applicability with a variety of other assembly designs, such as a Membrane Electrode Sub-Gasket Assembly design, as illustrated in Figure 5. In this embodiment, vias 26a and 26b are formed in structural film layers 25a and 25b, which in this case each overlap membrane 22. Adhesive 27 flows through vias 26a and 26b to attach structural film layers 25a and 25b to gas diffusion layers 23 and 23', as well as to membrane 22 and electrodes 20 and 21.

With the present invention, the following advantages are realized: no additional adhesive material or glue application required; no adhesive extends; capable for automated production lines; cost and material saving, no additional process step; the risk of potential negative chemical effect reduced; manufacturing times are significantly reduced (glue preparation, feed, and application eliminated); no additional effect on the assembly thickness and thereby definite advantages in stack production (dimension deviations are added); risk of GDL and CCM damage is reduced; tolerance advantages; material flow properties are reduced; simplified CCM cutout, since corners can be processed with sharp edges; GDL need not be pressed over the entire surface for assembly, i.e., the first surface pressing only occurs during stack assembly.

While the present invention has been described in connection with certain preferred embodiments, the scope of the invention is not intended to be limited thereby. Rather, the invention is to be given the scope defined in the appended claims.

## Claims

1. Apparatus having a membrane (22), an anode (21) adjacent one side of said membrane (22), a cathode (20) adjacent an opposite side of said membrane (22) forming a membrane electrode assembly , a first structural film layer (25a) disposed at a periphery of said membrane electrode assembly, a second structural film layer (25b) adhered to said first structural film layer (25a) by an adhesive (27), at least one of said first and second structural film layers (25a, 25b) also being adhered to one of said anode (21) and cathode (20) by said adhesive (27), said membrane electrode assembly and said first and second structural film layers (25a, 25b) being sandwiched by a pair of gas diffusion layers (23, 23'), **characterized in that**:
a. said first structural film layer (25a) has a plurality of vias (26a) therein; and
b. said second structural film layer (25b) has a plurality of vias (26b) therein which are in non-overlapping relation to said vias (26a) in said first structural film layer (25a);
c. wherein said adhesive (27) extends through said vias (26a) in said first structural film layer (25a) to adhere one of said pair of gas diffusion layers (23, 23') to said first structural film layer (25a), and said adhesive (27) extends through said vias (26b) in said second structural film layer (25b) to adhere the other of said pair of gas diffusion layers (23, 23') to said second structural film layer (25b).

2. A method of making an apparatus having a membrane (22), an anode (21) adjacent one side of said membrane (22), a cathode (20) adjacent an opposite side of said membrane (22) forming a membrane electrode assembly, a first structural film layer (25a) disposed at a periphery of said membrane electrode assembly, a second structural film layer (25b) adhered to said first structural film layer (25a) by an adhesive (27), at least one of said first and second structural film layers (25a, 25b) also being adhered to one of said anode (21) and cathode (22) by said adhesive (27), said membrane electrode assembly and said first and second structural film layers (25a, 25b) being sandwiched by a pair of gas diffusion layers (23, 23'), said method **characterized by**:
a. providing a plurality of vias (26a) in said first structural film layer (25a); and
b. providing a plurality of vias (26b) in said second structural film layer (25b) in non-overlapping relation to said vias (26a) in said first structural film layer (25a);
c. providing adhesive (27) on at least one of said first and second structural film layers (25a, 26a) to adhere them together;
d. adhering said one of said pair of gas diffusion layers (23, 23') to said first structural film layer (25a) by said adhesive (27) extending through said vias (26a) in said first structural film layer (25a), and adhering the other of said pair of gas diffusion layers (23, 23') to said second structural film layer (26a) by said adhesive (27) extending through said vias (26b) in said second structural film layer (26a).

## Patentansprüche

1. Vorrichtung mit einer Membran (22), einer an eine Seite der Membran (22) angrenzenden Anode (21) und einer an eine gegenüberliegende Seite der Membran (22) angrenzenden Kathode (20), die eine Membranelektrodenbaugruppe bilden, mit einer ersten Strukturfilmschicht (25a), die an einer Peripherie der Membranelektrodenbaugruppe angeordnet ist, einer zweiten Strukturfilmschicht (25b), die durch einen Klebstoff (27) an die erste Strukturfilmschicht (25a) geklebt ist, wobei durch den Klebstoff (27) auch mindestens eine der ersten und zweiten Strukturfilmschichten (25a, 25b) an eine der Anode (21) und Kathode (20) geklebt ist, wobei die Membranelektrodenbaugruppe und die ersten und zweiten Strukturfilmschichten (25a, 25b) zwischen ein Paar von Gasdiffusionsschichten (23, 23') geschichtet sind, **dadurch gekennzeichnet, dass**:
a. die erste Strukturfilmschicht (25a) eine Vielzahl von Durchgängen (26a) darin hat; und
b. die zweite Strukturfilmschicht (25b) eine Vielzahl von Durchgängen (26b) darin hat, die in nicht überlappender Beziehung zu den Durchgängen (26a) in der ersten Strukturfilmschicht (25a) stehen;
c. worin der Klebstoff (27) sich durch die Durchgänge (26a) in der ersten Strukturfilmschicht (25a) erstreckt, um eine aus dem Paar von Gasdiffusionsschichten (23, 23') an die erste Strukturfilmschicht (25a) zu kleben, und der Klebstoff (27) sich durch die Durchgänge (26b) in der zweiten Strukturfilmschicht (25b) erstreckt, um die andere aus dem Paar von Gasdiffusionsschichten (23, 23') an die zweite Strukturfilmschicht (25b) zu kleben.

2. Verfahren zum Herstellen einer Vorrichtung mit einer Membran (22), einer an eine Seite der Membran (22) angrenzenden Anode (21) und einer an eine gegenüberliegende Seite der Membran (22) angrenzenden Kathode (20), die eine Membranelektrodenbaugruppe bilden, mit einer ersten Strukturfilmschicht (25a), die an einer Peripherie der Membranelektrodenbaugruppe angeordnet ist, einer zweiten Strukturfilmschicht (25b), die durch einen Klebstoff (27) an die erste Strukturfilmschicht (25a) geklebt ist, wobei durch den Klebstoff (27) auch mindestens eine der ersten und zweiten Strukturfilmschichten (25a, 25b) an eine der Anode (21) und Kathode (20) geklebt ist, wobei die Membranelektrodenbaugruppe und die ersten und zweiten Strukturfilmschichten (25a, 25b) zwischen ein Paar von Gasdiffusionsschichten (23, 23') geschichtet sind, wobei das Verfahren **gekennzeichnet ist durch**:
a. Bereitstellen einer Vielzahl von Durchgängen (26a) in der ersten Strukturfilmschicht (25a); und
b. Bereitstellen einer Vielzahl von Durchgängen (26b) in der zweiten Strukturfilmschicht (25b) in nicht überlappender Beziehung zu den Durchgängen (26a) in der ersten Strukturfilmschicht (25a);
c. Bereitstellen von Klebstoff (27) auf mindestens einer der ersten und zweiten Strukturfilmschichten (25a, 25b), um sie zusammenzukleben;
d. Kleben von einer aus dem Paar von Gasdiffusionsschichten (23, 23') an die erste Strukturfilmschicht (25a) **durch** den Klebstoff (27), der sich **durch** die Durchgänge (26a) in der ersten Strukturfilmschicht (25a) erstreckt, und Kleben der anderen aus dem Paar von Gasdiffusionsschichten (23, 23') an die zweite Strukturfilmschicht (25b) **durch** den Klebstoff (27), der sich **durch** die Durchgänge (26b) in der zweiten Strukturfilmschicht (25b) erstreckt.

## Revendications

1. Agencement présentant une membrane (22), une anode (21) contiguë à une face de ladite membrane (22), une cathode (20) contiguë à une face opposée de ladite membrane (22) pour former un ensemble d'électrodes à membrane, une première couche pelliculaire structurelle (25a) disposée sur une périphérie dudit ensemble d'électrodes à membrane, une seconde couche pelliculaire structurelle (25b) adhérant à ladite première couche pelliculaire structurelle (25a) au moyen d'un adhésif (27), au moins une desdites première et seconde couches pelliculaires structurelles (25a, 25b) adhérant également à l'une desdites anode (21) et cathode (20) au moyen dudit adhésif (27), ledit ensemble d'électrodes à membrane et lesdites première et seconde couches pelliculaires structurelles (25a, 25b) étant pris en sandwich entre une paire de couches de diffusion gazeuse (23, 23'), **caractérisé en ce que** :
a. ladite première couche pelliculaire structurelle (25a) présente une pluralité de trous de liaison (26a) ; et
b. ladite seconde couche pelliculaire structurelle (25b) présente une pluralité de trous de liaison (26b) disposés de manière à ne pas chevaucher lesdits trous de liaison (26a) de ladite première couche pelliculaire structurelle (25a) ;
c. ledit adhésif (27) passant par lesdits trous de liaison (26a) de ladite première couche pelliculaire structurelle (25a) pour permettre l'adhésion d'une couche de diffusion gazeuse de ladite paire de couches de diffusion gazeuse (23, 23') à ladite première couche pelliculaire structurelle (25a), et ledit adhésif (27) passant par lesdits trous de liaison (26b) de ladite seconde couche pelliculaire structurelle (25b) pour permettre l'adhésion de l'autre couche de diffusion gazeuse de ladite paire de couches de diffusion gazeuse (23, 23') à ladite seconde couche pelliculaire structurelle (25b).

2. Procédé de réalisation d'un agencement présentant une membrane (22), une anode (21) contiguë à une face de ladite membrane (22), une cathode (20) contiguë à une face opposée de ladite membrane (22) pour former un ensemble d'électrodes à membrane, une première couche pelliculaire structurelle (25a) disposée sur une périphérie dudit ensemble d'électrodes à membrane, une seconde couche pelliculaire structurelle (25b) adhérant à ladite première couche pelliculaire structurelle (25a) au moyen d'un adhésif (27), au moins une desdites première et seconde couches pelliculaires structurelles (25a, 25b) adhérant également à l'une desdites anode (21) et cathode (20) au moyen dudit adhésif (27), ledit ensemble d'électrodes à membrane et lesdites première et seconde couches pelliculaires structurelles (25a, 25b) étant pris en sandwich entre une paire de couches de diffusion gazeuse (23, 23'), ledit procédé étant **caractérisé par** :
a. la réalisation d'une pluralité de trous de liaison (26a) dans ladite première couche pelliculaire structurelle (25a) ; et
b. la réalisation d'une pluralité de trous de liaison (26b) dans ladite seconde couche pelliculaire structurelle (25b) de manière à ne pas chevaucher lesdits trous de liaison (26a) de ladite première couche pelliculaire structurelle (25a) ;
c. la mise en place de l'adhésif (27) sur au moins une desdites première et seconde couches pelliculaires structurelles (25a, 25b) pour les faire adhérer ;
d. l'adhésion de ladite une couche de diffusion gazeuse de ladite paire de couches de diffusion gazeuse (23, 23') à ladite première couche pelliculaire structurelle (25a) au moyen dudit adhésif (27) passant par lesdits trous de liaison (26a) de ladite première couche pelliculaire structurelle (25a), et l'adhésion de l'autre couche de diffusion gazeuse de ladite paire de couches de diffusion gazeuse (23, 23') à ladite seconde couche pelliculaire structurelle (25b) au moyen dudit adhésif (27) passant par lesdits trous de liaison (26b) de ladite seconde couche pelliculaire structurelle (25b).
